Europäisches Patentamt

European Patent Office

Office européen des brevets

(19)

(11) **EP 0 544 269 B1**

(12) # EUROPEAN PATENT SPECIFICATION

(45) Date of publication and mention
of the grant of the patent:
**12.03.1997 Bulletin 1997/11**

(51) Int Cl.⁶: **G09G 5/24**

(21) Application number: **92120120.8**

(22) Date of filing: **25.11.1992**

(54) **Character generation device and method therefor**

Vorrichtung zur Zeichenerzeugung und entsprechendes Verfahren

Dispositif de génération de caractères et méthode correspondante

(84) Designated Contracting States:
**DE FR GB**

(30) Priority: **27.11.1991 JP 312753/91**

(43) Date of publication of application:
**02.06.1993 Bulletin 1993/22**

(73) Proprietor: **SEIKO EPSON CORPORATION**
**Shinjuku-ku Tokyo (JP)**

(72) Inventor: **Hori, Takashi**
**Suwa-shi, Nagano (JP)**

(74) Representative: **Diehl, Hermann O. Th., Dr. et al**
**Diehl, Glaeser, Hiltl & Partner**
**Patentanwälte**
**Postfach 19 03 65**
**80603 München (DE)**

(56) References cited:
**EP-A- 0 215 664          US-A- 4 503 469**

- **PROCEEDINGS OF THE 3RD INTERN.WORKSHOP ON PARALLEL PROCESSING BY CELLULAR AUTOMATA AND ARRAYS, NORTH HOLLAND (AMSTERDAM) & AKADEMIE VERLAG (BERLIN) 9 September 1986, Berlin, pp. 179-186; H. KIESEWETTER et al.: 'Bitexact Symmetric Scaling in Rasters'**

**Description**

The present invention relates, in general, to an outline font system and, more particularly, to a character generation device and method for generating a character pattern based on character code and size data.

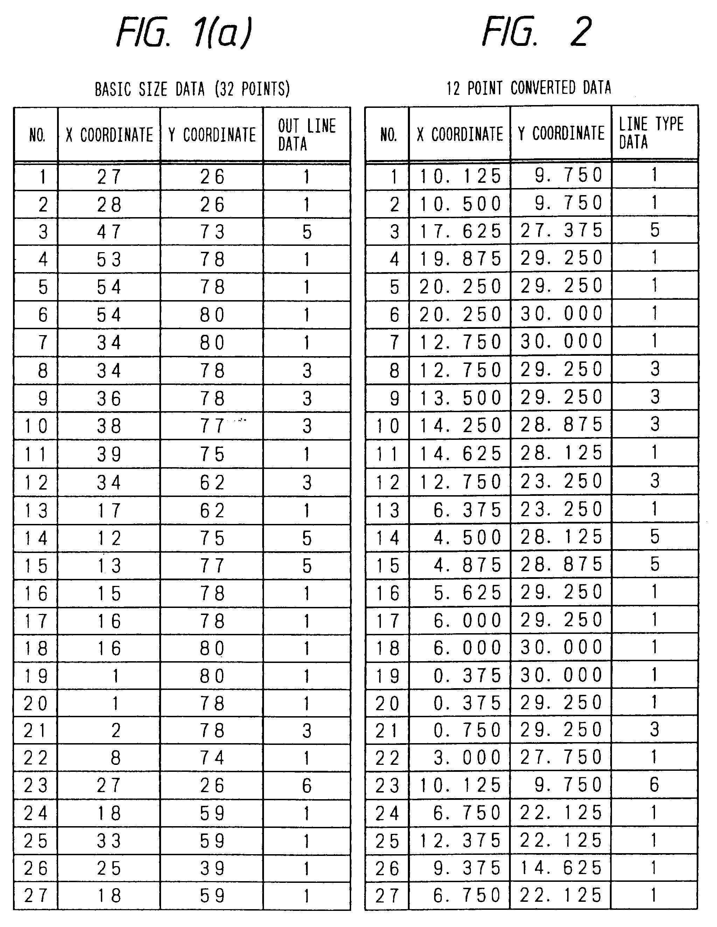

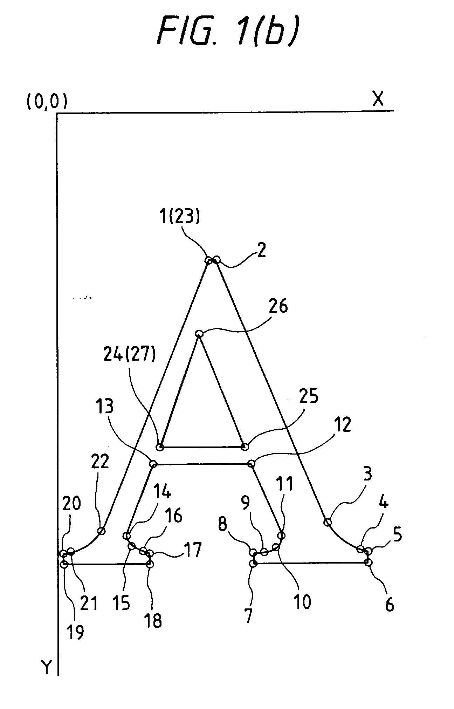

In conventional outline font systems, a reference character of a predetermined size is constructed based on reference coordinate data, such as that shown in Fig. 1 (a) and 1 (b), which is stored in a font data memory, for a reference coordinate system. In order to generate a character of a size larger or smaller than the predetermined size, the coordinate data is converted according to a predetermined algorithm.

After the reference coordinate data is converted, an interpolating operation is performed to connect the coordinate data points, then contour line information is formed. Finally, a painting operation is executed in accordance with the contour line information, thereby generating the character. The above-mentioned interpolating operation may include a linear function, a quadratic function, and/or a spline function performed repeatedly, all of which are complicated operations.

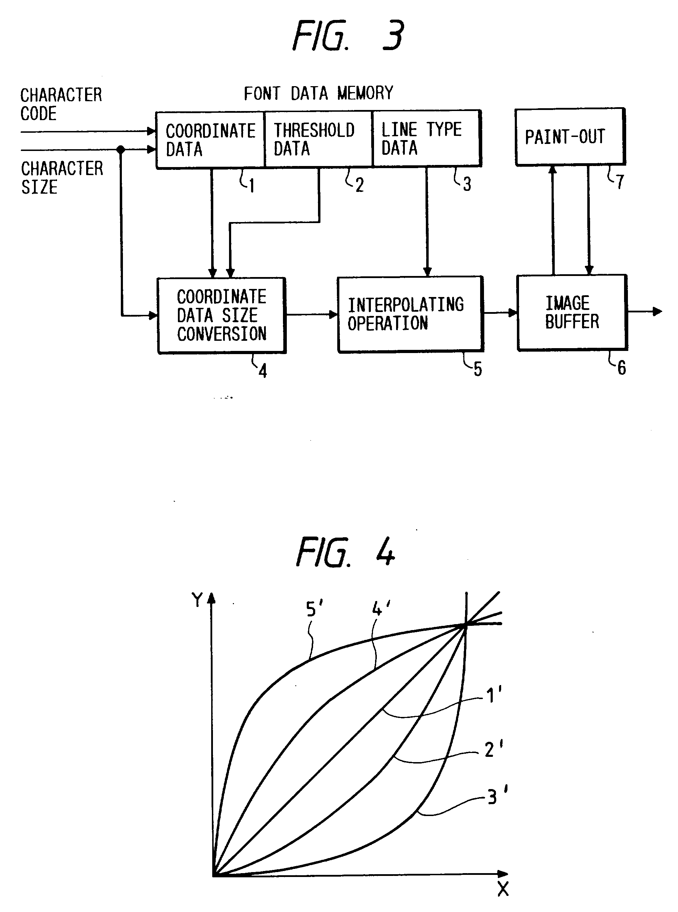

The coordinate data of Fig. 2 represents the results of converting the reference coordinate data of Fig. 1(a). In particular, the coordinate data of Fig. 2 represents the reference coordinate data of Fig. 1 (a) converted into data of 12 points, as an example. Since the reference coordinate data represents a 32 point character, the conversion to a 12 point character requires multiplying the reference coordinate data by 12/32. In this converting operation, while the reference coordinate data are expressed as integer some of the converted data (i.e., converted from 32 points to 12 points in size) are expressed as noninteger.

Conventionally, there are employed two methods for performing the interpolating operation for noninteger converted data. In one of these methods, a floating point operation is used in carrying out the interpolating operation. In the other, the noninteger converted data are rounded off according to a predetermined rule. For instance, a noninteger converted datum is rounded when the decimal portion is greater than or equal to .5, and rounded down when the decimal operation is less than .5 to thereby round it to the nearest whole number, prior to executing the interpolating operation.

The former method is very accurate because the size conversion results in very little or no error and thus the outline font data are of very high quality. However, because this method involves floating point operations in the interpolating operation which is very complicated, it takes a relatively long time to generate a character.

In the latter method, since the figure operated on in the interpolating operation is an integer, the operation can be performed at very high speeds. However, because of quantizing errors, which are generated by rounding the converted data up or down to the nearest integer, many errors result during the interpolating operation. As a result, when compared with a character generated by the former method, this method produces characters of very poor quality.

From EP-A-0215664 a method and apparatus for creating and storing characters for display on a video screen is known. The shape of the graphic character is displayed at various degrees of resolution. The graphic character is stored as a bit map or as coefficients of spline curves. These can be scaled up or down to give different character sizes.

The characters are stored as a set of spline coordinates. For determining the size of displayed graphic characters, there exist conversion means including means for selectively scaling spline coefficients. This has the drawback, that handling of splines and especially scaling of spline coefficients is difficult, time-consuming and needs sophisticated software.

Accordingly, it is an object of the present invention to eliminate the drawbacks and disadvantages of the above-described methods and to provide a character generation device which performs at high speeds while still generating a character pattern of high quality.

This object is solved by the character generating device of independent claim 1 and the method of independent claim 8. Further advantageous features, aspects and details of the invention are evident from the dependent claims, the description and the drawings. The claims are intended to be understood as a first non-limiting approach of defining the invention in general terms.

In accordance with a specific aspect of the present invention there is provided a character generation device of an outline font system for generating a character of a predetermined size based on character data, the character generation device including a font memory storing the character data including reference coordinate data, threshold data, and line-type data, coordinate data size converting means, for converting the reference coordinate data to coordinate data corresponding to a predetermined size of a character, and an interpolating operation means, responsive to the converted coordinate data and the line-type data, for generating contour line information of the character.

In accordance with a further specific aspect of the present invention there is provided a character generation device of an outline font system for generating a character of a predetermined size based on character data, the character generation device including a font memory storing the character data including reference coordinate data, branching data, and line-type data, a plurality of coordinate data size converting means, and for converting the reference coordinate data to coordinate data corresponding to a predetermined size of a character and for adjusting the converted data according to threshold data, and an interpolating operation means, responsive to the converted coordinate data and the line-type data, for generating contour line information of the character.

In accordance with a still further aspect of the present invention there is provided a method of generating a character of a predetermined size based on reference coordinate data, threshold data, and line-type data stored in a font memory, including the steps of converting the reference coordinate data to coordinate data corresponding to a selected predetermined size by multiplying the reference coordinate data by a predetermined number and adding the threshold data thereto, rounding the converted data to the nearest whole number, generating contour line information based on the converted coordinate data rounded to the nearest whole number, and generating a character of the selected predetermined size based on the converted coordinate data and the contour line information.

Fig. 1(a) illustrates a table of reference coordinate data and line-type data stored in a font data memory of a font outline system;

Fig. 1(b) is a graphical representation of points corresponding to the coordinate data of Fig. 1(a) after being connected in the X-Y coordinate system;

Fig. 2 illustrates a table of coordinate data of 12 points obtained by converting the reference coordinate data of Fig. 1(a);

Fig. 3 shows a block diagram of a character generation device according to a first embodiment of the present invention;

Fig. 4 graphically represents examples of line-type data;

Figs. 5 (a) to 5(h) illustrate variations of a character "&" of 12 points obtained when a threshold value $\theta$ is varied from 0/8 to 7/8 sequentially;

Fig. 6 illustrates a variation of a character "&" of 12 point obtained using a floating point operation during an interpolating operation; and

Fig. 7 shows a block diagram of another embodiment of a character generation device according to the invention.

A first embodiment of a character generation device according to the invention will be described with reference to Fig. 3.

The character generation device includes, in general, a font data memory 1, 2, and 3, a coordinate data size conversion means 4, an interpolating operation means 5, an image buffer 6, and a paint-out means 7. The font data memory stores reference coordinate data 1, threshold value data 2, and line-type data 3. The coordinate data 1, as shown in Fig. 1(a), includes X and Y coordinates, each representing a point on a reference coordinate system which is necessary to form a reference character of a predetermined size. Fig. 1(b) shows a character "A" which is generated based on the data of Fig. 1(a). The threshold value data 2 is used to determine whether a decimal fraction, which is produced as a result of the reference coordinate data converting process, is rounded up or down to a whole number. That is, the threshold value data is added to the coordinate value, and then the sum of these two numbers is rounded down to the nearest whole number thereby converting a floating point number to an integer.

The coordinate data size conversion means 4 processes data by converting the reference coordinate data to coordinate data representing a character of a requested size by processing the character size and threshold value data in the following equation:

$$\text{Conversion data} = \text{INT}\left( \frac{\text{Requested character size}}{\text{Reference character size}} \times (\text{Coordinate data} + \text{Threshold value}) \right)$$

wherein, INT is a function which rounds the result within the parenthesis to a whole number.

The interpolating operation means 5 performs a predetermined algorithm to generate contour line information for connecting two points with each other. In this example, the algorithm shows "the interpolating algorithm with straight and parabola" which is one of the varieties of interpolating algorithm. As shown in Fig. 4, the means 5 has six functions, which correspond to the line-type data 3, respectively, including a straight line $1^1$, a rightward convex parabola $3^1$, an intermediate line $2^1$ between the straight line $1^1$ and the rightward convex parabola $3^1$, a leftward convex parabola $5^1$, an intermediate line $4^1$ between the straight line $1^1$ and the leftward convex parabola $5^1$, and a line with no interpolation $6^1$. (These indicate just straight and a parabola line information.) The interpolating operations are performed for each of two points by substituting the converted reference coordinate data corresponding to the size into the function which is determined by the line-type data 3. The interpolated results are written sequentially into an image buffer 6. Thus, after completing the interpolation process for all points, contour line information is stored in the image buffer 6.

Finally, the paint-out processing means 7 generates a character according to the contour line information stored in the image buffer 6, whereby a character of a requested size is formed and stored in the image buffer.

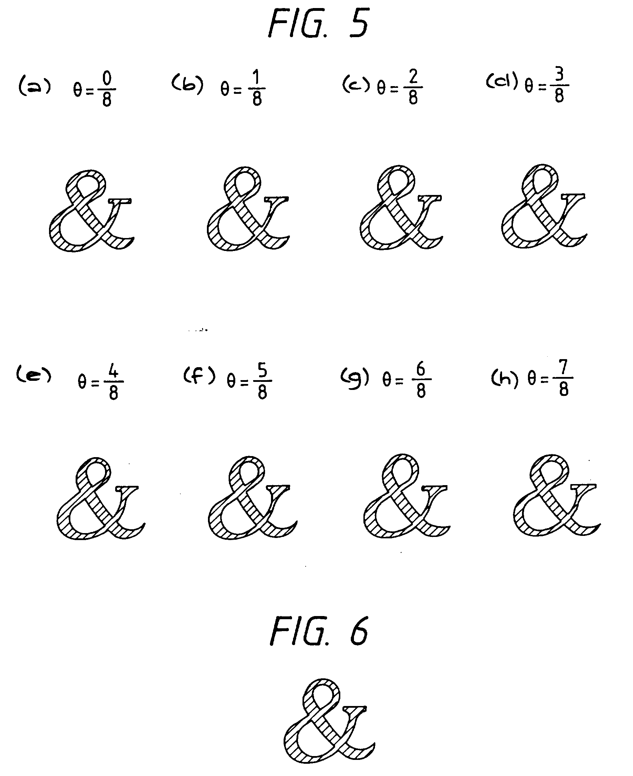

Next, with reference to Figs. 5 and 6, an example will be provided to illustrate the use of the threshold value.

First, a requested size is selected. The threshold value is then set initially to 0/8, for example. A character pattern is generated by simulating the above-mentioned method. Next, the threshold value is set to 1/8, for example, and a second simulation is performed. Likewise, the threshold value is set to 2/8, 3/8, 4/8, 5/8, 6/8, and 7/8 sequentially and simulations are performed sequentially. Of these simulations, the threshold value that generates a character of the highest quality is selected. Finally, the value is stored into the font data memory as the datum of the character and of the size.

Referring to Fig. 5(a) - 5(h), a 12 point character "&" is shown, as an example, wherein the threshold value is varied sequentially. The shape of the character due to the variation of the threshold value is shown in Fig. 5. (In the example of Fig. 5, the interpolation process between two points employed an interpolation algorithm using a straight line and/ or a parabola. However, similar results can be obtained when other types of interpolation algorithms are used.)

In Fig. 6, there is shown an image data of 12 points of the character "&" obtained when an interpolating operation is performed using a floating point operation (i.e., the converted reference coordinate data are not rounded or modified). Thus, the "&" of Fig. 6 represents a character of high quality, but, as stated above, an interpolation process using a floating point operation takes a relatively long time to generate a character.

However, according to the present invention, it is apparent that the character obtained when the threshold value is set to 5/8 (Fig. 5(f)) is very similar, if not the same, in quality to the high quality character of Fig. 6. Thus, the threshold value data of 5/8 for the 12 point character "&" is selected and stored in the font data memory. In addition, if the number of stages used to divide the threshold value is decided in advance (i.e., the denominator) to be a constant number, then the converting process can incorporate the denominator in the size conversion processing. Thus, only the numerator of the threshold value will need to be stored in the font data memory, thus saving memory storage space.

In this embodiment, an example is provided in which the threshold value is divided into 8 stages. However, it will be quite obvious to those skilled in the art that the greater the number of stages, the more ideal or higher quality character pattern will be generated. It will also be obvious that the operation speed does not depend on the number of the divided stages.

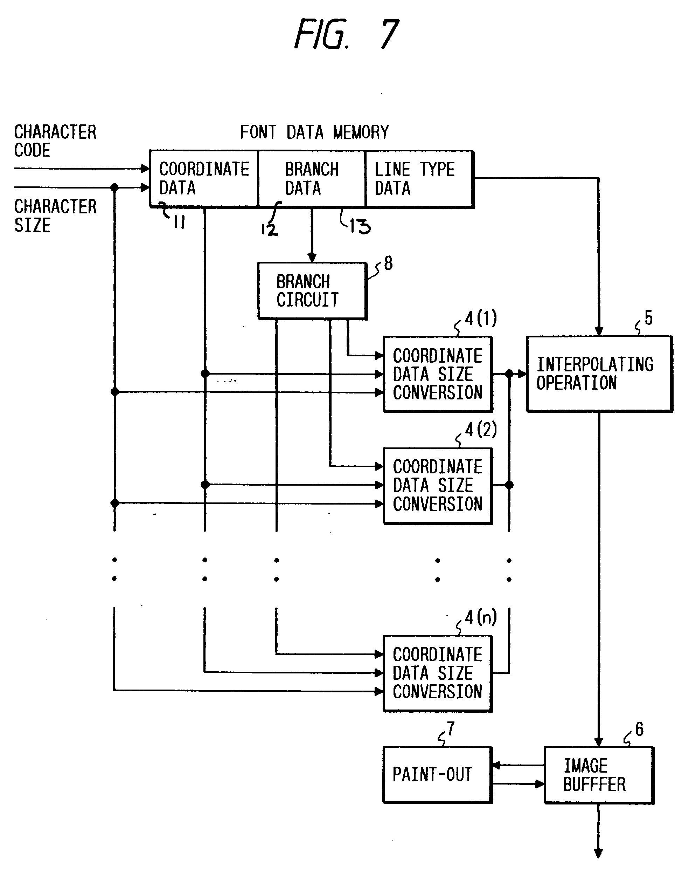

In the above illustrated embodiment, a circuit or module determines whether a converted reference coordinate data should be rounded or not, for each of the threshold values. However, according to the invention, another embodiment is also possible. For example, as shown in Fig. 7, a predetermined number of circuits or modules 4(1) to 4(n) respectively having different threshold values may be employed to determine the most optimum threshold value to use. In this instance, the predetermined number of circuits or modules is set to correspond to the number of stages of the threshold value. In the font data memory (11,12,13), branch data 12 is input to a branch circuit 8 to select one of the coordinate data size conversion circuit or module. Thus, it will be understood that, by executing a branch operation in accordance with the branch data, a decimal fraction can be rounded in any thresholds. It will also be understood that, by increasing the number of branch circuits or branch module (i.e., increasing n), then a character of higher quality can be generated accordingly.

There has thus been described a character generation device and method therefor in which, according to the present invention, a figure used in a complicated interpolating operation for generating contour line information between two points is obtained by converting reference coordinate data expressed as a floating decimal fraction into an integral number by use of a threshold data stored in a font data memory. Consequently, the operation can be performed at high speeds while still providing a character of high quality.

## Claims

1. A character generation device of an outline font system for generating a character of a predetermined size based on character data, said character generation device comprising:

   a font memory (1, 2, 3) storing the character data; coordinate data size converting means (4);

   and interpolating means (5), responsive to said converted coordinate data and said line-type data, for generating contour line information of the character,

   characterized in that

   the stored character data include reference coordinate data (1), threshold data (2), and line-type data (3); and

the coordinate data size converting means (4) is coupled to said font memory, for converting said reference coordinate data to coordinate data corresponding to a predetermined size of a character including means using the threshold data (2) to determine whether a decimal fraction, which is produced as a result of the reference coordinate data converting process, is rounded up or down to a whole number.

2. The character generation device as defined in claim 1, further comprising means for adding said threshold value to said converted coordinate data and means for determining whether to round said converted coordinate data.

3. The character generation device as defined in claim 2, wherein said threshold value equals one of a plurality of values between 0 and 1.

4. The character generation device as defined in claim 1 further comprising a storing device for storing branching data (12); and
a plurality of coordinate data size converting means (4(1)...4(n)), each being coupled to said font memory and for converting said reference coordinate data to coordinate data corresponding to a predetermined size of a character and for adjusting said converted data according to threshold data.

5. The character generation device as defined in Claim 4, further comprising a branching circuit (8) for selecting one of said plurality of coordinate data size converting means (4(1)...4(n)) based on said branching data.

6. The character generation device as defined in any one of the preceding claims further comprising:

   an image buffer (6) for storing said contour line information; and

   painting means (7), responsive to said contour line information for painting the inside of the contour lines.

7. The character generation device as defined in any one of the preceding claims wherein said line-type data represents one of a straight line and a plurality of parabolas of different characteristics.

8. A method of generating a character of a predetermined size based on reference coordinate data, threshold data, and line-type data stored in a font memory especially in a character generating device of one of the preceding claims, said method comprising the steps of:

   converting the reference coordinate data to coordinate data corresponding to a selected predetermined size by multiplying said reference coordinate data by a predetermined number and adding the threshold data thereto;

   rounding said converted data to the nearest whole number; generating contour line information based on said converted coordinate data rounded to the nearest whole number; and

   generating a character of said selected predetermined size based on said converted coordinate data and said contour line information.

9. The method as defined in Claim 8, wherein said threshold data comprises a plurality of threshold values, said method further comprising the steps of:

   simulating the generation of the character of said selected predetermined size for each of said plurality of threshold values;

   selecting the threshold value which produces the character of highest quality; and

   storing the threshold value data in the font data memory as the data of the character and of the size.

**Patentansprüche**

1. Zeichenerzeugungsvorrichtung eines Umriß-Font-Systems zur Erzeugung eines Zeichens einer vorbestimmten Größe basierend auf Zeichendaten, wobei die Zeichenerzeugungsvorrichtung folgendes aufweist:

einen Fontspeicher (1, 2, 3), der die Zeichendaten speichert;

ein Koordinatendatengrößenumwandlungsmittel (4);

und Interpolationsmittel (5), die auf die umgewandelten Koordinatendaten und die Daten der Linienart reagieren, zur Erzeugung einer Konturlinieninformation des Zeichens,

dadurch gekennzeichnet, daß

die gespeicherten Zeichendaten Referenzkoordinatendaten (1), Schwellendaten (2) und Daten (3) der Linienart umfassen; und

das Koordinatendatengrößenumwandlungsmittel (4) mit dem Fontspeicher verbunden ist, um die Referenzkoordinatendaten in Koordinatendaten entsprechend einer vorbestimmten Größe eines Zeichens umzuwandeln, mit Mitteln, welche die Schwellendaten (2) verwenden, um zu bestimmen, ob ein Dezimalbruch, welcher als Ergebnis des Verfahrens der Umwandlung der Referenzkoordinatendaten entsteht, auf eine ganze Zahl ab- oder aufgerundet wird.

2. Zeichenerzeugungsvorrichtung gemäß Anspruch 1, die des weiteren Mittel zum Addieren des Schwellenwertes zu den umgewandelten Koordinatendaten und Mittel zur Bestimmung, ob die umgewandelten Koordinatendaten gerundet werden sollen, aufweist.

3. Zeichenerzeugungsvorrichtung gemäß Anspruch 2, bei der der Schwellenwert einem Wert aus einer Mehrzahl von Werten zwischen 0 und 1 entspricht.

4. Zeichenerzeugungsvorrichtung gemäß Anspruch 1, mit des weiteren einer Speichervorrichtung zum Speichern von Verzweigungsdaten (12); und
einer Mehrzahl von Koordinatendatengrößenumwandlungsmitteln (4(1)...4(n)), von welchen jedes mit dem Fontspeicher verbunden ist, zur Umwandlung der Referenzkoordinatendaten in Koordinatendaten entsprechend einer vorbestimmten Größe eines Zeichens und zur Anpassung der umgewandelten Daten gemäß Schwellendaten.

5. Zeichenerzeugungsvorrichtung gemäß Anspruch 4, die des weiteren eine Verzweigungsschaltung (8) zur Auswahl eines Mittels aus der Mehrzahl von Koordinatendatengrößenumwandlungsmitteln (4(1) ...4(n)) auf der Basis der Verzweigungsdaten aufweist.

6. Zeichenerzeugungsvorrichtung gemäß einem der vorhergehenden Ansprüche, die des weiteren folgendes aufweist:

einen Bildpuffer (6) zur Speicherung der Konturlinieninformation; und

Ausmalmittel (7), die auf die Konturlinieninformation reagieren, um das Innere der Konturlinien auszumalen.

7. Zeichenerzeugungsvorrichtung gemäß einem der vorhergehenden Ansprüche, bei der die Daten der Linienart eine Form ausgewählt aus einer geraden Linie und einer Mehrzahl von Parabeln verschiedener Merkmale darstellen.

8. Verfahren zur Erzeugung eines Zeichens einer vorbestimmten Größe auf der Basis von Referenzkoordinatendaten, Schwellendaten und Daten der Linienart, welche in einem Fontspeicher gespeichert werden, besonders in einer Zeichenerzeugungsvorrichtung gemäß einem der vorhergehenden Ansprüche, wobei das Verfahren folgende Schritte umfaßt:

Umwandlung der Referenzkoordinatendaten in Koordinatendaten entsprechend einer ausgewählten vorbestimmten Größe durch Multiplizieren der Referenzkoordinatendaten mit einer vorbestimmten Zahl und Addieren der Schwellendaten hierzu;

Runden der umgewandelten Daten auf eine ganze Zahl; Erzeugung von Konturlinieninformationen auf der Basis der umgewandelten Koordinatendaten, welche auf eine ganze Zahl gerundet werden; und

Erzeugung eines Zeichens der ausgewählten vorbestimmten Größe auf der Basis der umgewandelten Koordinatendaten und der Konturlinieninformation.

9. Verfahren gemäß Anspruch 8, bei dem die Schwellendaten eine Mehrzahl von Schwellenwerten umfassen, wobei das Verfahren des weiteren folgendes Schritte umfaßt:

Simulierung der Erzeugung des Zeichens der ausgewählten vorbestimmten Größe für jeden Wert aus der Mehrzahl der Schwellenwerte;

Auswahl des Schwellenwerts, der das Zeichen höchster Qualität erzeugt; und

Speichern der Schwellenwertdaten in dem Fontdatenspeicher als Daten des Zeichens und der Größe.

## Revendications

1. Dispositif de génération de caractères d'un système de polices dessinées, destiné à générer un caractère d'une taille prédéterminée, sur la base de données de caractères, ledit dispositif de génération de caractères comprenant :

une mémoire de polices (1, 2, 3), contenant les données de caractères ;
des moyens de conversion de taille de données de coordonnées (4) ;
et des moyens d'interpolation (5), sensibles auxdites données de coordonnées converties et auxdites données de type de ligne, pour générer des informations de ligne de contour du caractère,

caractérisé en ce que

les données de caractères stockées comportent des données de coordonnées de référence (1), des données de seuil (2) et des données de type de ligne (3) ; et
les moyens de conversion de taille de données de coordonnées (4) sont couplés à ladite mémoire de polices, pour convertir lesdites données de coordonnées de référence en données de coordonnées correspondant à une taille prédéterminée d'un caractère, comportant des moyens utilisant les données de seuil (2) pour déterminer si une fraction décimale, qui est créée en tant que résultat du processus de conversion de données de coordonnées de référence, est arrondie par excès ou par défaut à un nombre entier.

2. Dispositif de génération de caractères selon la revendication 1, comprenant en outre des moyens pour additionner ladite valeur de seuil auxdites données de coordonnées converties, et des moyens pour déterminer s'il faut arrondir lesdites données de coordonnées converties.

3. Dispositif de génération de caractères selon la revendication 2, dans lequel ladite valeur de seuil est égale à une parmi une pluralité de valeurs comprises entre 0 et 1.

4. Dispositif de génération de caractères selon la revendication 1, comprenant en outre un dispositif de stockage pour stocker des données de branchement (12) ; et
une pluralité de moyens de conversion de taille de données de coordonnées (4(1) ... 4(n)), chacun étant couplé à ladite mémoire de polices, et pour convertir lesdites données de coordonnées de référence en données de coordonnées correspondant à une taille prédéterminée d'un caractère, et pour régler lesdites données converties selon les données de seuil.

5. Dispositif de génération de caractères selon la revendication 4, comprenant en outre un circuit de branchement (8), pour sélectionner un parmi ladite pluralité de moyens de conversion de taille de données de coordonnées (4(1) ... 4(n)), sur la base desdites données de branchement.

6. Dispositif de génération de caractères selon l'une quelconque des revendications précédentes, comprenant en outre

un tampon d'image (6), pour stocker lesdites informations de ligne de contour ; et
des moyens de peinture (7), sensibles auxdites informations de ligne de contour, pour peindre l'intérieur des lignes de contour.

**7.** Dispositif de génération de caractères selon l'une quelconque des revendications précédentes, dans lequel lesdites données de type de ligne représentent une parmi une ligne droite et une pluralité de paraboles de caractéristiques différentes.

**8.** Procédé de génération de caractères d'une taille prédéterminée, sur la base de données de coordonnées de référence, de données de seuil et de données de type de ligne, stockées dans une mémoire de polices, en particulier dans un dispositif de génération de caractères selon l'une quelconque des revendications précédentes, ledit procédé comprenant les étapes de :

conversion des données de coordonnées de référence en données de coordonnées correspondant à une taille sélectionnée prédéterminée, en multipliant lesdites données de coordonnées de référence par un nombre prédéterminé, et en y additionnant les données de seuil ;
arrondi desdites données converties au nombre entier le plus proche ;
génération d'informations de ligne de contour, sur la base desdites données de coordonnées converties arrondies au nombre entier le plus proche ; et
génération d'un caractère de ladite taille sélectionnée prédéterminée et desdites informations de ligne de contour.

**9.** Procédé selon la revendication 8, dans lequel lesdites données de seuil comprennent une pluralité de données de seuil, ledit procédé comprenant en outre les étapes de :

simulation de la génération du caractère de ladite taille sélectionnée prédéterminée pour chacune parmi ladite pluralité de valeurs de seuil ;
sélection de la valeur de seuil qui fournit le caractère de la meilleure qualité ; et
stockage des données de valeur de seuil dans la mémoire de données de polices en tant que données du caractère et de la taille.

## FIG. 1(a)

BASIC SIZE DATA (32 POINTS)

| NO. | X COORDINATE | Y COORDINATE | OUT LINE DATA |
|---|---|---|---|
| 1 | 27 | 26 | 1 |
| 2 | 28 | 26 | 1 |
| 3 | 47 | 73 | 5 |
| 4 | 53 | 78 | 1 |
| 5 | 54 | 78 | 1 |
| 6 | 54 | 80 | 1 |
| 7 | 34 | 80 | 1 |
| 8 | 34 | 78 | 3 |
| 9 | 36 | 78 | 3 |
| 10 | 38 | 77 | 3 |
| 11 | 39 | 75 | 1 |
| 12 | 34 | 62 | 3 |
| 13 | 17 | 62 | 1 |
| 14 | 12 | 75 | 5 |
| 15 | 13 | 77 | 5 |
| 16 | 15 | 78 | 1 |
| 17 | 16 | 78 | 1 |
| 18 | 16 | 80 | 1 |
| 19 | 1 | 80 | 1 |
| 20 | 1 | 78 | 1 |
| 21 | 2 | 78 | 3 |
| 22 | 8 | 74 | 1 |
| 23 | 27 | 26 | 6 |
| 24 | 18 | 59 | 1 |
| 25 | 33 | 59 | 1 |
| 26 | 25 | 39 | 1 |
| 27 | 18 | 59 | 1 |

## FIG. 2

12 POINT CONVERTED DATA

| NO. | X COORDINATE | Y COORDINATE | LINE TYPE DATA |
|---|---|---|---|
| 1 | 10. 125 | 9. 750 | 1 |
| 2 | 10. 500 | 9. 750 | 1 |
| 3 | 17. 625 | 27. 375 | 5 |
| 4 | 19. 875 | 29. 250 | 1 |
| 5 | 20. 250 | 29. 250 | 1 |
| 6 | 20. 250 | 30. 000 | 1 |
| 7 | 12. 750 | 30. 000 | 1 |
| 8 | 12. 750 | 29. 250 | 3 |
| 9 | 13. 500 | 29. 250 | 3 |
| 10 | 14. 250 | 28. 875 | 3 |
| 11 | 14. 625 | 28. 125 | 1 |
| 12 | 12. 750 | 23. 250 | 3 |
| 13 | 6. 375 | 23. 250 | 1 |
| 14 | 4. 500 | 28. 125 | 5 |
| 15 | 4. 875 | 28. 875 | 5 |
| 16 | 5. 625 | 29. 250 | 1 |
| 17 | 6. 000 | 29. 250 | 1 |
| 18 | 6. 000 | 30. 000 | 1 |
| 19 | 0. 375 | 30. 000 | 1 |
| 20 | 0. 375 | 29. 250 | 1 |
| 21 | 0. 750 | 29. 250 | 3 |
| 22 | 3. 000 | 27. 750 | 1 |
| 23 | 10. 125 | 9. 750 | 6 |
| 24 | 6. 750 | 22. 125 | 1 |
| 25 | 12. 375 | 22. 125 | 1 |
| 26 | 9. 375 | 14. 625 | 1 |
| 27 | 6. 750 | 22. 125 | 1 |

# FIG. 1(b)

## FIG. 3

CHARACTER CODE

CHARACTER SIZE

FONT DATA MEMORY

| COORDINATE DATA | THRESHOLD DATA | LINE TYPE DATA |
|---|---|---|
| 1 | 2 | 3 |

PAINT-OUT
7

COORDINATE DATA SIZE CONVERSION
4

INTERPOLATING OPERATION
5

IMAGE BUFFER
6

## FIG. 4

# FIG. 5

(a) $\theta = \frac{0}{8}$    (b) $\theta = \frac{1}{8}$    (c) $\theta = \frac{2}{8}$    (d) $\theta = \frac{3}{8}$

(e) $\theta = \frac{4}{8}$    (f) $\theta = \frac{5}{8}$    (g) $\theta = \frac{6}{8}$    (h) $\theta = \frac{7}{8}$

# FIG. 6

# FIG. 7

CHARACTER
CODE

CHARACTER
SIZE

FONT DATA MEMORY

| COORDINATE DATA | BRANCH DATA | LINE TYPE DATA |
|---|---|---|

11   12   13

BRANCH CIRCUIT  8

COORDINATE DATA SIZE CONVERSION  4(1)

COORDINATE DATA SIZE CONVERSION  4(2)

COORDINATE DATA SIZE CONVERSION  4(n)

INTERPOLATING OPERATION  5

PAINT-OUT  7

IMAGE BUFFFER  6